# EUROPEAN PATENT APPLICATION

(11) **EP 1 655 222 A1**
(43) Date of publication of application: **10.05.2006**
(21) Application number: 05110258.0
(22) Date of filing: 02.11.2005
(51) Int. Cl.: B64F 1/34, B64F 1/36

(54) **Combined air starter and air conditioning device for turbine aircraft**

(30) Priority: 04.11.2004 IT MI20042112
(71) Applicant: Grassi, Sergio, 21042 Caronno Pertusella, VA (IT)
(72) Inventor: Grassi, Sergio, 21042 Caronno Pertusella, VA (IT)
(74) Representative: Ripamonti, Enrico

(57) **Abstract**

A combined air conditioning and air starter device (1) for aircraft, comprising an engine (15) driving at least one compressor (18), and selection means (20, 51, 26) arranged to connect a delivery side (18b) of the compressor either to a temperature conditioning system (72) for at least one compartment of an aircraft or to an air starter system (71) for one or more turbines thereof.

## Description

The present invention relates to a combined air starter and air conditioning air cycle device for turbine aircraft in accordance with the introduction to the main claim.

Aircraft, in particular those used for civil aviation but also those used in military aviation, are known to present compartments in which the temperature has to be conditioned during ground tests. For example, in civil aircraft, both the pilot cockpit and the passenger cabin must be air conditioned, and in some cases also other compartments or parts of the aircraft, during stoppages and ground tests.

Likewise in military aircraft it is of fundamental importance to air condition both the pilot cockpit and the equipment compartment to prevent overheating and dangerous condensation particularly on the vehicle electrical and electronic equipment during tests. In this respect, it is important not to allow the delicate instruments and equipment on board to undergo violent temperature and humidity changes, to hence avoid condensate formation, and to disperse the heat generated by them during ground tests.

When the main aircraft turbines are running, the power required for the temperature and air conditioning is taken directly from the turbines in the form of compressed air.

In contrast when the aircraft is on the ground, for example at rest in an airport or in a hanger and is to be prepared for flight, but with the main turbines switched off, conditioning has to be carried out using ground devices.

To condition aircraft when on the ground, devices using air as the cooling gas are used. One of these devices is described in detail in utility model application M12002U000146 filed by the same applicant. This device comprises a heat exchanger connected to a compressor connected via a pipe to an expansion turbine from which a pipe is connected to the environment to be cooled, the compressor and turbine being connected together mechanically and defining a turbocompressor unit. The air fed to the turbocompressor unit originates from a suitable compressor, for example of the double lobe blower or other type, directly connected to its own electric motor or internal combustion engine, for example a diesel engine.

All the components of this device are mounted on a truck which is moved into proximity with the aircraft as soon as the main turbines are switched off. The output air from the device is preferably at a temperature of +10°C and at a predetermined pressure, which is variable depending on the type of aircraft.

The main aircraft turbines are started by a (pneumatic) compressed air starter unit. This unit consists simply of a compressor, for example of positive displacement screw type, directly connected to its own electric motor or internal combustion engine, also of diesel type.

The air compressed in this manner operates a small turbine which, connected to the main turbine via a gearbox, rotates it at the speed required for starting. The air from the starter unit is at about 200°C and at a pressure of 3 bar.

The compressed air starter unit is also mounted on its own truck. In the case of military aircraft, in an emergency situation this truck remains always available close to the aircraft to enable the aircraft to rapidly start when required.

Consequently, the problem of the known art is that, when the aircraft is at rest on the runway, both the pneumatic starter unit and the temperature conditioning device must always be present.

This results in considerable logistical problems due to the massive presence of equipment and devices adjacent to the aircraft. In fact, when the aircraft is at rest on the runway these two devices are not the only devices adjacent to it. A 400 Hz alternating current generator and a pressurized oil feed unit are also always present.

This results in considerable accessibility problems for the aircraft in addition to creating disorder on the runway. Moreover the presence of so many vehicles around the aircraft is a danger to aircraft manoeuvring when started.

An object of the present invention is to provide a compressed air starter device for turbine aircraft combined with an air conditioning device of air cycle type.

In particular the present invention relates to a device which is compact and easy to use both as an air starter device and as an air conditioning device without the use of coolant gases.

These and other objects are attained by a combined starting and air conditioning device for turbine aircraft in accordance with the technical teachings of the accompanying claims.

Further characteristics and advantages of the invention will be apparent from the description of a preferred but non-exclusive embodiment of a combined air starter and air conditioning device for turbine aircraft, illustrated by way of non-limiting example in the accompanying drawings, in which:
Figure 1 is a perspective view of the combined air starter and air conditioning device for turbine aircraft according to the present invention; and
Figure 2 is a schematic view of he components of the device of Figure 1.

With reference to said figures, a combined air starter and air conditioning device for turbine aircraft is indicated overall by 1.

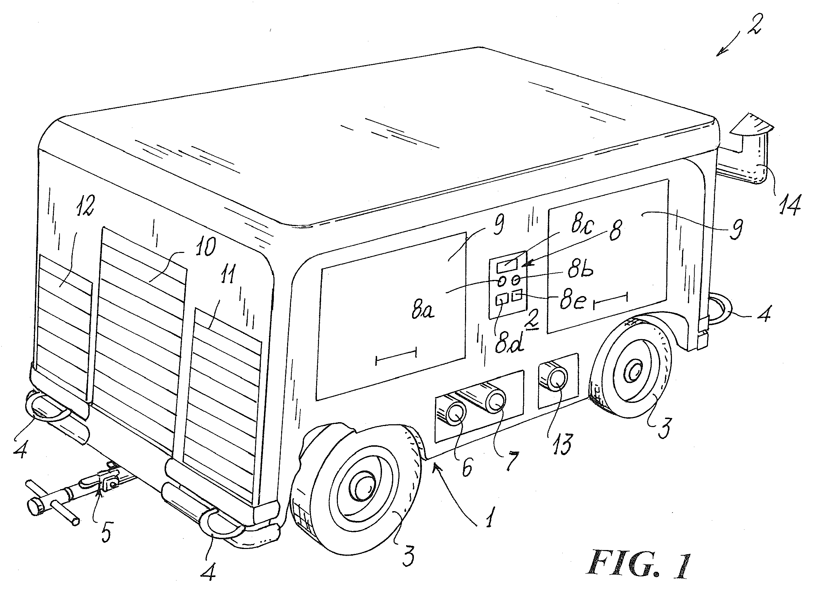

The device components are mounted on an independent vehicle 2 which moves on its own wheels 3. The vehicle presents towing hooks 4 which enable it to be coupled to other similar vehicles, for example current or pressurized oil generators, and a steering coupling 5 by which the wheels 3 are steered. The vehicle also presents a first exit port 6 for conditioned air, a second exit port 7 for compressed air from the air starter device, a third discharge port 13, and an air intake 14. Figure 1 also shows a control panel 8, a radiator 11 and heat exchangers 11, 12 positioned on the vehicle 2.

The control panel presents a series of controls 8a, 8b for activating the emission of conditioned air from the first port 6, or alternatively the emission of high pressure air from the second port 7, and a plurality of indicators 8c, 8d, 8e for indicating the operating states of the equipment of the device 1. The method of operation of the invention will be apparent hereinafter.

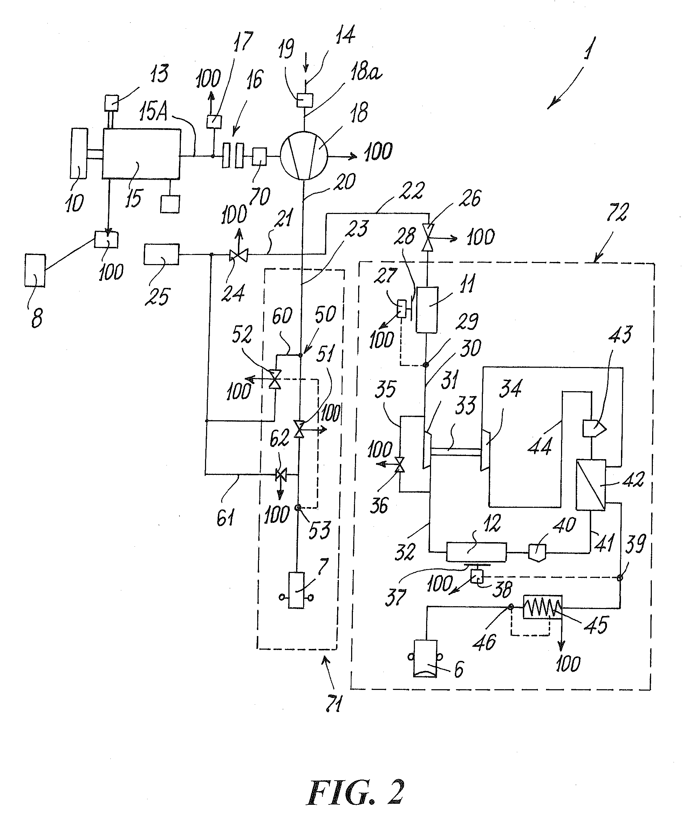

Installed on the vehicle there are a plurality of components arranged as in Figure 2 and accessible via doors 9. An engine 15 (for example of the reciprocating direct injection diesel type) is present, making the vehicle 2 independent by powering it. The engine 15 presents an independent cooling system of conventional type connected to the radiator 10 and discharges its gaseous combustion products through the port 13, its operating parameters being controlled by a control unit 100. The exit shaft 15a is connected to the input side of a friction clutch 16 with servo-control 17. The output side of the friction clutch 16 is connected via a multiplier 70 to a compressor 18 for example of screw type. The compressor 18 is oil-free so that there is no trace of compressor lubricant oil on its delivery side. The compressor suction side 18a is connected to a filter 19 connected to an intake port 14.

The compressor delivery side 18b is connected to a pipe 20 which divides into three branches 21, 22, 23 each connected to a relative valve.

A first branch 21 of the pipe 20 is for scavenging and is intercepted by a scavenging valve 24 opening into a silencer 25 discharging to atmosphere.

A second branch 22 feeds an air conditioning system 72 and is connected to a valve 26 for activating the air conditioning.

The exit of the valve 26 is connected to a first heat exchanger 11 provided with a suitable valve 28 operated by a motor 27. The motor r.p.m. is controlled automatically on the basis of the temperature measured by a temperature sensor 29 for the air passing through an exit pipe 30 from the heat exchanger 11, to maintain the temperature at a value set by the control unit 100.

The pipe 30 opens into the suction side of a compressor 31, the impeller of which is rigid with a shaft 33 of a turbine 34.

The compressor 31 is bypassed by a pipe 35 provided with a relative shut-off valve 36 for no-load starting. The delivery of the compressor 31 is connected via a pipe 32 to the second heat exchanger 12, provided with a fan 37 and motor 38.

Downstream of the heat exchanger 12 there is a metal coalescent condensate separator 40 connected by the pipe 41 to a counter-current heat exchanger 42 followed by a second condensate separator 43 of metal coalescent type. The outlet of the separator 43 is connected to the turbine 34 by the pipe 44, while its discharge returns to the counter-current heat exchanger 42, to then reach a heater 45 and then the air conditioning port 6.

The outlet temperature from the heat exchanger 42 is measured by a temperature sensor 39 which regulates in known manner the rotational speed of the motor 38, and hence the heat transfer across the heat exchanger 12.

The heat transfer across the heater 45 is also monitored by a thermometer 46 positioned at its outlet.

The branch 23 feeds a compressed air starter system 71, and is intercepted by a valve 51 for activating the system 71.

The branch 23 is connected to the compressed air starter port 7, and presents upstream of the valve 51 a safety pipe 60 intercepted by a safety valve 52 of conventional type for general use, but with an opening time less than two tenths of a second. The valve 52 is for general use and differs from those usually used in air starter systems, in that in those systems the valves used are of avionics derivation and hence very costly. The safety pipe 60 opens into the silencer 25. The opening of the valve 52 is controlled by a pressure sensor 53 connected into the pipe 23 downstream of the valve 51; it is activated when the pressure in the pipe 20 exceeds 4.2 bar.

Downstream of the valve 51 there is a discharge pipe 61 which opens into the silencer 25 and is intercepted by a valve 62.

To complete the description, it should be noted that all the valves 24, 51, 52, 62, 26 and 36 are connected to the control unit 100, which activates them, deactivates them and determines their state. The same applies to the motors 27 and 38 of the heat exchangers 11 and 12 respectively, to the sensors 53, 29, 39 and 46, and to the heater 45.

The control unit 100 is also connected to the engine 15 to control its r.p.m. and its delivered power. In the same manner the control unit 100 is able to monitor the activation state of the friction clutch 16, in order to transmit or not transmit the torque required for activating the compressor 18, even with the engine rotating. All the valves 24, 51, 52, 62, 26 and 36 are preferably of the pneumatically operated type and are fed from a suitable compressed air receiver filled by a battery-operated dedicated compressor (these components are not shown for simplicity).

The method of operation of the described device is as follows.

An operator firstly starts the engine 15 from the control panel 8. The engine rotates at minimum r.p.m. The operator also connects the port 6 to the compressed air starter inlet and the air conditioning inlet on the aircraft.

When required, the operator operates a control on the control panel 8 which activates the air conditioning function.

In practice the control unit 100 inserts the friction clutch 16 and progressively increases the engine r.p.m. until a predetermined value, e.g. 1800 r.p.m., is reached. The engine r.p.m. is monitored by a conventional speed indicator (not shown). To increase the engine r.p.m., the control unit 100 acts on the means which regulate the fuel quantity injected into the cylinders. The compressor attains a rotational speed of 1800 r.p.m.

In the meantime, with the air conditioning valve 26 and starter valve 51 closed, the control unit opens the scavenging valve 24 for about 30 seconds, so that the air pumped by the compressor is expelled through the silencer 25.

On termination of the scavenging cycle the unit 100 opens the air conditioning valve 26 and then closes the scavenging valve 24.

The air then passes through the heat exchanger 11, which heats it to a predetermined temperature of about 58°C. This temperature can be set by the control unit 100. It should be noted that the speed of the motor 27 associated with the heat exchanger is regulated by the control unit on the basis of the temperature measured at its exit by the sensor 29. In this respect, the temperature and pressure conditions at the inlet of the compressor 18 evidently vary on the basis of the environmental conditions under which it operates.

Hence rotating the motor 29 at higher speed results in greater air/air heat transfer across the heat exchanger 11, and hence a lower exit air temperature for an equal exchanger inlet temperature, whereas a lower speed results in lesser heat transfer and hence a higher exit temperature.

The high pressure air at controlled temperature is further compressed by the compressor 31 rotated by the turbine 34.

Advantageously this compressor can be bypassed by opening the valve 36, to enable no-load starting of the turbine 34, as known to the expert of the art.

At its exit from the compressor 31 the air is cooled by the heat exchanger 12 in a similar manner to that by the heat exchanger 11, on the basis of the temperature measured by the sensor 39 positioned upstream of the heater 45.

The air then passes through the dehumidifier 40 and is then cooled by the counter-current heat exchanger 42, downstream of which it is again treated by a dehumidifier 43.

The cooled and dehumidified compressed air then enters the turbine 34 where it expands, with considerable decrease in its temperature and pressure.

This air then enters the counter-current heat exchanger 42, is slightly heated and flows to the port 6, it being previously heated by the heater 45 on the basis of its exit temperature.

The air exit temperature is measured by the sensor 46; on the basis of this temperature the control unit 100 controls the heat transfer across the heater 45 such as to obtain air at the desired temperature from the port 6.

Dehumidified air emerges from the port 6 at a temperature of about 10°C, optimal for aircraft air conditioning.

When the aircraft is to be started, the operator deactivates the air conditioning function by acting on the panel 89, and activates the air starter function.

The control unit 100 then opens the starter valve 51 and closes the air conditioning valve 26, then increases the r.p.m. of the engine 15 to about 2500 r.p.m., in order to increase the volumetric throughput of the compressor.

During this stage the presence of the friction clutch 16 is fundamental, it enabling any load unbalance between the user side and the engine side to be compensated, making the throughput increase more uniform. As is well known, the aircraft ports 7 are constructionally very delicate and cannot withstand pressures exceeding the (very narrow) limits for which they are designed. The importance of increasing pressure in the most gradual manner possible is therefore apparent, compensating by means of a clutch any sudden variations in the torque transmitted by the engine.

The air exit pressure from the port 7 is therefore about 3 bar, while its temperature is around 200°C, these being optimal values for starting the turbines of an aircraft.

It should be noted that the r.p.m. increase by the engine 15 and the consequent increase in volumetric throughput of the compressor 18 are essential for correct switch-over between the two different uses of the unit.

In a different embodiment, downstream of the valve 26 an air conditioning system is installed identical to that described in utility model application M12002U000146, which is to be considered an integral part of the present description.

## Claims

1. A combined air conditioning and air starter device (1) for aircraft, comprising an engine (15) driving at least one compressor (18), and selection means (20, 51, 26) arranged to connect a delivery side (18b) of the compressor either to a temperature conditioning system (72) for at least one compartment of an aircraft or to an air starter system (71) for one or more turbines thereof.

2. A device as claimed in claim 1, **characterised in that** a friction clutch (16) is present between the engine (15) and the compressor (18).

3. A device as claimed in claim 1, **characterised in that** a multiplier or demultiplier gear unit (70) is present between the engine (15) and the compressor (18).

4. A device as claimed in claim 1, **characterised by** comprising a control unit (100) interfacing with the selection means (51, 26) and with the engine (15), said control unit (100) controlling the power transmitted to the compressor (18) on the basis of whether the compressor (18) is connected to the air conditioning system (72) or to the starter system (71).

5. A device as claimed in claim 4, **characterised in that** the control unit (100) is connected to means for regulating the fuel quantity fed to the engine (15), to control by these means the power transmitted to the compressor (18) by varying the r.p.m. of the engine (15).

6. A device as claimed in claim 4, **characterised in that** the control unit (100) is arranged to control the selection means (51, 26) to which it is directly connected.

7. A device as claimed in claim 1, **characterised in that** the selection means comprise a delivery pipe (20) presenting a first branch (26) and a second branch (23) connected respectively to an air conditioning system (72) and to an air starter system (71), each intercepted by a relative valve (26, 23).

8. A device as claimed in claim 1, **characterised in that** the pipe (20) presents a scavenging pipe intercepted by a relative valve (24) and communicating with at least part of the first branch (26) and second branch (23).

9. A device as claimed in claim 8, **characterised in that** said scavenging pipe opens to atmosphere via a silencer (25).

10. A device as claimed in claim 1, **characterised in that** the engine (15) is a diesel engine, of direct injection type.

11. A device as claimed in claim 1, **characterised in that** the compressor (18) is of positive displacement screw type.

12. A device as claimed in claim 11, **characterised in that** the compressor (18) is of oil-free type.

13. A device as claimed in claim 1, **characterised by** being mounted on a vehicle (2) provided with its own wheels (3).

14. A device as claimed in claim 7, **characterised in that** the second branch (23) presents a safety vent pipe (60) intercepted by a general use valve (51).

15. A device as claimed in claim 14, **characterised in that** the valve (51) has an opening time of two tenths of a second.
